# EUROPEAN PATENT APPLICATION

(11) **EP 2 090 593 A1**
(43) Date of publication of application: **19.08.2009**
(21) Application number: 09152330.8
(22) Date of filing: 06.02.2009
(51) Int. Cl.: C08C 19/22, C08C 19/25, C08F 2/26, C08F 8/30

(54) **Methods of making siloxy-imine functionalized rubbery polymers and uses thereof in rubber compositions for tires**

(30) Priority: 13.02.2008 US 30224
(71) Applicant: The Goodyear Tire & Rubber Company, Akron, OH 44316-0001 (US)
(72) Inventor: Rachita, Michael Joseph, North Canton, OH Ohio 44720 (US); Bates, Kenneth Allen, Brunswick, OH 44212 (US); Guscoff, Vanessa Marika, Wadsworth, OH 44281 (US); Wong, Tang Hong, Hudson, OH Ohio 44236 (US)
(74) Representative: Kutsch, Bernd

(57) **Abstract**

The invention includes a siloxy-imine functionalized rubbery polymer, which exhibits good reinforcing characteristics and filler dispersing effect, a method for making, and a rubber composition including the same. In one embodiment, a process for manufacturing the functionalized rubbery polymer includes polymerizing a conjugated diene monomer using an organolithium compound as an initiator in a hydrocarbon solvent. Next, an active terminal end of the polymer is reacted with a functionalized terminating agent, represented by the general formula RCH=N(CH₂)ₓSi(OR¹)_{Y}R²_{3-Y}, wherein R represents a group consisting of an aryl or substituted aryl having 6 to 18 carbon atoms, or a heterocycle or heteroaryl having 3 to 18 carbon atoms; R¹ and R² each independently represents a group having 1 to 18 carbon atoms selected from an alkyl, a cycloalkyl, an allyl, and or aryl; X is an integer from 1 to 20; and Y is an integer from 1 to 3.

## Description

### Field of the Invention

The present invention is directed to methods of making a siloxy-imine functionalized rubbery polymer and uses thereof in rubber compositions for tires.

### Background of the Invention

It is sometimes desirable for tires to have a combination of good wet skid resistance, low rolling resistance, tear strength, and good wear characteristics. Wear characteristics of a tire tread are often difficult to improve without sacrificing traction and/or rolling resistance. In one aspect, such properties depend upon dynamic viscoelastic properties of the tire tread rubber composition and the elastomers (rubbers) utilized in the rubber composition.

In order to reduce the rolling resistance and to improve the tread wear characteristics of tires, rubbers or rubbery polymers having a high rebound physical property (low hysteresis) have often been used for the tire tread rubber compositions. However, in order to increase the wet skid resistance of a tire tread, elastomers (rubbery polymers) that have a relatively lower rebound physical property (higher hysteresis) which thereby undergo a greater energy loss have sometimes been used for such tread rubber compositions. In order to achieve such relatively inconsistent viscoelastic properties for the tire tread rubber compositions, blends (mixtures) of various types of synthetic and natural rubber are normally utilized in tire treads.

It is often desirable for synthetic rubbers (elastomers) to exhibit relatively low levels of hysteresis (indicated by relatively higher rebound values). This is usually particularly important in the case of elastomers that are used in tire tread rubber compositions. In practice, the elastomers are conventionally blended with sulfur curative, rubber reinforcing fillers such as, for example precipitated silica and rubber reinforcing carbon black, sulfur vulcanization accelerators, rubber antidegradants and other desired rubber chemicals and are then subsequently vulcanized, or cured, under pressure at an elevated temperature in a suitable mold. The physical properties of such cured rubber compositions depend upon the degree to which the rubber reinforcing fillers, such as carbon black or silica, are homogeneously dispersed throughout the elastomer. The degree of homogeneity of the dispersement of the reinforcing filler relates, at least in part, to the degree of affinity that carbon black or silica for the rubbery polymer.

Amorphous silica reinforcement has sometimes been used in combination with rubber reinforcing carbon black which has sometimes been used to promote lower rolling resistance (e.g. better vehicular fuel economy) and to promote better traction (e.g. skid and braking resistance) for a tire tread rubber composition. However, use of such silica reinforcement filler, as compared to rubber reinforcing carbon black, often results in a decrease in wear resistance (e.g. increase in tread wear) of a tire tread rubber composition.

Accordingly, it is envisioned that use of a combination amorphous silica (e.g. precipitated silica) and rubber reinforcing carbon black might be used to balance the challenges of promoting reduced tread wear (e.g. increased abrasion resistance of the rubber composition), reduced tire rolling resistance (e.g. increased rebound values of the rubber composition) as well as promoting traction for the tire tread instead of using carbon black or silica separately as reinforcing filler.

In one aspect, terminal modified or functionalized elastomers, which promote an interaction with a wide variety of such silica and carbon black reinforcing fillers to promote good dispersibility of such reinforcing fillers within the rubber composition, and thereby suitable wear resistance (e.g. suitable abrasion resistance) of the rubber composition, might be used.

Accordingly, it is envisioned herein that functionalized rubber polymers (elastomers) and methods of making same for use in rubber compositions, such as for use in tires, are needed.

### Summary of the Invention

The invention relates to a process according to claim 1, a rubbery polymer according to claim 6, 7 or 8, a rubber composition according to claim 9 or 11 and to a tire according to claim 12.

Dependent claims refer to preferred embodiments of the invention.

The invention includes a siloxy-imine functionalized rubbery polymer, which exhibits good reinforcing characteristics and filler dispersing effect, a method for making the siloxy-imine functionalized polymer, and a rubber composition comprising the siloxy-imine functionalized polymer having good fracture characteristics, wear resistance, and low exothermicity, without the impairment of the wet performance. Such effects can be accomplished by affecting the interactions of the siloxy-imine functionalized polymer with rubber reinforcing silica.

In one embodiment, a process of manufacturing a siloxy-imine functionalized rubbery polymer includes preparing the functionalized rubbery polymer by polymerizing a conjugated diene monomer using an organolithium compound as an initiator in a hydrocarbon solvent, followed by reacting an active terminal of the resulting polymer with a functionalized terminating agent, bearing a siloxy and an aldimino group. The functionalized terminating agent has a structure according to the general formula:

RCH=N(CH₂)_{X}Si(OR¹)_{Y}R²_{3-Y}, Formula (1)

wherein R represents a group consisting of an aryl or substituted aryl having 6 to 18 carbon atoms, or a heterocycle or heteroaryl having 3 to 18 carbon atoms; R¹and R² each independently represents a group having 1 to 18 carbon atoms selected from an alkyl, a cycloalkyl, an allyl, or an aryl; X is an integer from 1 to 20; and Y is an integer from 1 to 3. In one example, at least one R¹ group is an ethyl radical.

In another embodiment, a rubber composition includes 10 to 130 parts by weight rubber reinforcing filler and 100 parts by weight rubbery polymer (elastomer), with at least 30% by weight of the rubbery polymer being a siloxy-imine functionalized rubbery polymer. Such functionalized rubbery polymer is prepared by polymerizing a conjugated diene monomer wherein the polymerization reaction is carried out in a hydrocarbon solvent and effected by an organolithium compound as an initiator. Next, an active terminal of the resulting polymer is reacted with a functionalized terminating agent compound having a siloxy and an aldimino group, represented by the general formula:

RCH=N(CH₂)_{X}Si(OR¹)_{Y}R²_{3-Y}, Formula (1)

wherein R represents a group consisting of an aryl or substituted aryl having 6 to 18 carbon atoms, or a heterocycle or heteroaryl having 3 to 18 carbon atoms; R¹ and R² each independently represents a group having 1 to 18 carbon atoms selected from an alkyl, a cycloalkyl, an allyl, or an aryl; X is an integer from 1 to 20; and Y is an integer from 1 to 3; and the filler is selected from silica, carbon black, or a combination of a silica and a carbon black. In one example, at least one R¹ group is an ethyl radical.

In another embodiment, a tire has a component (e.g. tire tread) that includes a rubber composition having 10 to 130 parts by weight rubber reinforcing filler and 100 parts by weight rubbery polymer (elastomer), with at least 25% to 100% by weight of the rubbery polymer being a siloxy-imine functionalized rubbery polymer. Such functionalized rubbery polymer, as hereinbefore referenced, is prepared by polymerizing a conjugated diene monomer wherein the polymerization reaction is carried out in a hydrocarbon solvent and effected by an organolithium compound as an initiator. Next, a chemically active terminal of the resulting polymer is reacted with a functionalized terminating agent compound having a siloxy and an aldimino group, represented by the general formula:

RCH=N(CH₂)_{X}Si(OR¹)_{Y}R²_{3-Y}, Formula (1)

wherein R represents a group consisting of an aryl or substituted aryl having 6 to 18 carbon atoms, or a heterocycle or heteroaryl having 3 to 18 carbon atoms; R¹ and R² each independently represents a group having 1 to 18 carbon atoms selected from an alkyl, a cycloalkyl, an allyl, or an aryl; X is an integer from 1 to 20; and Y is an integer from 1 to 3; and the filler is selected from amorphous silica (e.g. precipitated silica), rubber reinforcing carbon black, or a combination of such silica and carbon black.

### Detailed Description of the Invention

A siloxy-imine functionalized rubbery polymer is provided which is obtained by polymerizing or copolymerizing a conjugated diene monomer by using an organolithium compound as an initiator in a hydrocarbon solvent, and thereafter allowing an active terminal of the resulting polymer to react with a functionalized terminating agent bearing a siloxy and an aldimino group, represented by the general formula:

RCH=N(CH₂)_{X}Si(OR¹)_{Y}R²_{3-Y}, Formula (1)

wherein R represents a group consisting of an aryl or substituted aryl having 6 to 18 carbon atoms, or a heterocycle or heteroaryl having 3 to 18 carbon atoms; R¹ and R² each independently represents a group having 1 to 18 carbon atoms selected from an alkyl, a cycloalkyl, an allyl, or an aryl; X is an integer from 1 to 20; and Y is an integer from 1 to 3; and the filler is selected from silica, carbon black, or a combination of a silica and a carbon black. In one example, R is selected from phenyl, substituted-phenyl, naphthyl, substituted-naphthyl, or heteroaryl. In another example, R is phenyl. In one example, at least one R¹ group is an ethyl radical.

As indicated, the functionalized terminating agent includes a siloxy and an aldimino group. The aldimino group can hydrogen bond with a variety of acidic functional groups and is susceptible to nucleophilic addition at the imine carbon. The siloxy group can undergo a condensation reaction with the silanol group on the surface of silica and is susceptible to nucleophilic substitution at silicon.

A significant aspect of this invention is considered herein as being the use of aldimine based siloxy-imine terminators derived from aldehydes in contrast to using ketimine based siloxy-imine terminators derived from ketones.

This is considered herein to be significant because the resulting functional elastomer has a significantly greater reactivity towards silica than a functional elastomer with its functionality derived from a siloxy-imine terminator derived from a ketone, particularly in the sense of R of Formula (1) representing a group selected from aryl, substituted aryl or a heterocycle, particularly where R represents a phenyl group, and particularly when combined with at least one of R¹ being an ethyl group.

When an active terminal of the polymerized conjugated diene, for example, is reacted with the functionalized terminating agent of Formula (1) with its combination of siloxy and aldimino groups, a mixture of products may be obtained, such as a product of a nucleophilic substitution with the alkoxysilyl group and a product of an addition reaction to the aldimino group, or both. Therefore, in the case of the reaction between the active terminal of the resulting polymer and the aldimino terminus of the functionalized terminating agent, a secondary amine is produced. When such resultant functionalized polymer is compounded with a filler, the secondary amine functionality is expected to facilitate an interaction with an acidic functional group on the surface of the filler, thereby providing a desirable filler dispersing and reinforcing effect. Further, the secondary amine is capable of forming a hydrogen bond with a silanol group, which is expected to cause a desirable dispersion of silicon.

The functionalized terminating agent also includes an alkoxysilyl group that performs a condensation reaction with a hydroxyl group (e.g. silanol group) on the surface of the amorphous silica (e.g. precipitated silica) when introduced into an end of the resulting polymer chain. The synergism of this condensation reaction and the force of the above-mentioned hydrogen bond by the amino group can provide a highly desirable reinforcing effect.

Representative of the functionalized terminating agent containing a combination of alkoxy and aldimino groups for the elastomer, include, for example, N-benzylidene-3-(triethoxysilyl)-1-propaneamine and N-naphthylidene-3-(triethoxysilyl)-1-propaneamine. Other examples may be contemplated by one having ordinary skilled in the art.

The amount of the functionalized terminating agent used may be, for example, 0.25 to 5.0 mol per one mole of the organo-alkali metal compound, which is used as an initiator for polymerization. In another example, the amount of functionalized terminating agent may be, for example, 0.5 to 1.5 mol per one mole of the organo-alkali metal compound. An amount of less than 0.25 mol is not desirable because the alkoxy group is consumed in a coupling reaction. However, an amount of more than 5 moles is not considered herein as being desirable, because, in this range, an excess of the terminating agent becomes of little added value.

Examples of the conjugated diene monomer include 1,3-butadiene, isoprene, 1,3-pentadiene, 2,3-dimethylbutadiene, 2-phenyl-1,3-butadiene, and 1,3-hexadiene. The conjugated diene monomer may be a homopolymer or a copolymer. Copolymerization can be with another conjugated diene monomer or a vinyl aromatic monomer, for example. Examples of the vinyl aromatic hydrocarbon monomer for use in copolymerization with the conjugated diene monomer include styrene, a-methylstyrene, 1-vinylnaphthalene, 3-vinyltoluene, ethylvinylbenzene, divinylbenzene, 4-cyclohexylstyrene, and 2,4,6-trimethylstyrene.

Functionalized vinyl aromatic monomers can also be used in copolymerization with the conjugated diene monomer and vinyl aromatic hydrocarbon monomer to form a terpolymer. Examples of functionalized vinyl aromatic monomers include 1-[(4-Ethenylphenyl)methyl]-pyrrolidine and 1-[(4-Ethenylphenyl)ethyl]-pyrrolidine, such as disclosed in US-A- 6,627,721, which is incorporated herein by reference in its entirety.

When carrying out copolymerization using a conjugated diene monomer and a vinyl aromatic hydrocarbon monomer, the monomers, in one example, are 1,3-butadiene and styrene, respectively. From a practical standpoint, these monomers are readily available and have desirable anionic polymerization properties, including living properties.

Examples of the initiator for use in the polymerization reaction include organolithium compounds. In one example, the lithium compounds have 2 to 20 carbon atoms. Specific examples include ethyllithium, n-propyllithium, i-propyllithium, n-butyllithium, secbutyllithium, t-octyllithium, n-decyllithium, phenyllithium, 2-naphthyllithium, 2-butyl-phenyllithium, 4-phenyl-butyllithium, cyclohexyllithium, 4-cyclopentyllithium, and a reaction product between diisopropenylbenzene and butyllithium. The amount of initiator used includes 0.1 to 20 mmol based on 100 g of monomers.

The polymerization process is carried out in a solvent, such as a hydrocarbon solvent, that does not destroy the organolithium initiator. A suitable solvent may be selected from an aliphatic hydrocarbon, an aromatic hydrocarbon, or an alicyclic hydrocarbon. In one example, the hydrocarbons have 3 to 8 carbon atoms. Examples of the hydrocarbon include propane, n-butane, i-butane, n-pentane, i-pentane, n-hexane, mixed hexanes, cyclohexane, propene, 1-butene, i-butene, trans-2-butene, cis-2-butene, 1-pentene, 2-pentene, 1-hexene, 2-hexene, benzene, toluene, xylene, and ethylbenzene. These solvents may be used alone or in combination. From a practical standpoint, mixed hexanes, cyclohexane, and pentane are readily available and have desirable anionic polymerization solvent properties.

The monomer concentration in the solvent may be for example 5 to 50% by weight. In another example, the concentration may be for example 10 to 30% by weight. When carrying out copolymerization between a conjugated diene monomer and a vinyl aromatic hydrocarbon monomer, the content of the vinyl aromatic hydrocarbon monomer in the monomer mixture charged into a reactor may be for example 3 to 50% by weight. In another example, the content is 5 to 45% by weight.

A modifier may be used when anionic polymerization of a conjugated diene monomer is carried out. The term "modifier" is used herein to mean a compound that has a function to control the microstructure of a conjugated diene polymer and the compositional distribution of monomer units in a copolymer composed of a conjugated diene monomer and a vinyl aromatic hydrocarbon monomer. For example, the increase of the proportion of 1,2-linkage of butadiene portions of a butadiene polymer or in a butadiene portion of a butadiene-styrene copolymer, or the increase of the proportion of the 3,4-linkage of an isoprene polymer can be controlled. In addition, randomization of butadiene units or the styrene units in a butadiene-styrene copolymer, for example, can be controlled. The modifiers are not particularly limited. Examples of the modifiers include ethers such as dimethoxybenzene, tetrahydrofuran, dimethoxyethane, diethylene glycol dibutyl ether, diethylene glycol dimethyl ether, bis(tetrahydrofurylpropane), and tertiary amines such as trimethylamine, pyridine, N-methylmorpholine, N,N,N',N'-tetramethylethylenediamine, and 1,2-dipiperidinoethane. Further examples include potassium salts such as potassium-t-amylate and potassium-t-butoxide and sodium salts such as sodium-t-amylate. The amount to be used of the modifier is within the range of from 0.01 to 10 molar equivalents per one mole of the organolithium compound.

The reaction between the functionalized terminating agent and the polymerized or copolymerized monomer can be carried out utilizing standard temperatures for diene polymerization. Such temperatures can range from 30°C to 110°C, for example. The polymerization reaction can be carried under a pressure generated by the reaction. It is normally desirable to carry out the reaction under a pressure sufficient to keep the monomers substantially in a liquid phase. That is, the pressure for the polymerization reaction depends on the substances to be polymerized, diluents to be used, and polymerization temperatures, and a higher pressure can be employed if desired. Such a pressure can be obtained by an appropriate method, for example, such as by pressurizing the reactor by a gas inert to the polymerization reaction.

Generally, it is desirable to remove water, oxygen, carbon dioxide, and other catalyst poison from all of the materials, such as initiator, solvent, monomer, and the like, involved in the polymerization process.

Although the timing and method for adding the functionalized terminating agent, which contains the combination of alkoxy and aldimino groups, to the polymerization system chain is not particularly limited, generally such a terminating agent is added when the polymerization is completed or near completion. In other words, the polymerization is normally carried out until high conversions of at least 85 percent are attained. For instance, the functionalized terminating agent, which contains the combination of alkoxy and aldimino groups, will normally be added only after a monomer conversion (conversion to the elastomer) of greater than 85 percent has been realized.

The siloxy-imine functionalized rubbery polymer or copolymer obtained, in one example, can have, for example, a glass transition point (Tg) of -95 to -10°C as measured by DSC (Differential Scanning Calorimetry) using a heating rate of 10°C/min.

The Mooney viscosity (ML₁₊₄/100°C.) of the uncured siloxy-imine functionalized rubber polymer may, for example, be in a range of from 10 to 150. In another example, the Mooney viscosity may be, for example, in a range of from 15 to 70.

The siloxy-imine functionalized rubbery polymer can be used together with conventional rubbery polymers to provide a rubber composition for use in the tire industry. Examples of the conventional rubbery polymer include natural rubber and diene-based synthetic rubbers. Examples of the diene-based synthetic rubbers include emulsion styrene/butadiene copolymers, solution styrene/butadiene copolymers, 1,4-cis-polybutadiene, 1,2-vinyl-polybutadiene, 1,4-cis-polyisoprene, 3,4-polyisoprene, styrene/isoprene/butadiene copolymers, isoprene/butadiene copolymers, styrene/isoprene copolymers, butyl rubber, ethylene/propylene copolymers, and blends thereof. A rubber component, having a branched structure formed by use of a polyfunctional modifier such as tin tetrachloride, or a multifunctional monomer such as divinyl benzene may also be used.

The rubber composition, which includes at least 25% to 100% by weight siloxy-imine functionalized rubbery polymer, with 50% to 75% weight percent being preferred, also can include rubber reinforcing carbon black or rubber reinforcing silica, or both as reinforcing fillers. Clay and/or organic fillers such as starch can also be used as rubber reinforcing fillers.

The silica for use in the present invention is a synthetic amorphous rubber reinforcing silica. Examples include wet-process silica (precipitated silica), dry-process silica (fumed silica), calcium silicate, and aluminum silicate. In one example, the silica is precipitated silica.

Examples of various rubber reinforcing carbon blacks may be found, for example, the Vanderbilt Rubber Handbook, 13^{th} Edition (1990) pages 416 through 418.

The amount of the rubber reinforcing filler used in the rubber composition can be, for example, within a range of from 10 to 130 phr (e.g. in a range of from 20 to 110 phr).

When synthetic amorphous silica (e.g. precipitated silica) is used as filler in the rubber composition, a silica coupling agent can be used to further increase the reinforcing property at the time when the silica is incorporated. Such silica coupling agents have a moiety reactive with hydroxyl groups (e.g. silanol groups), on the silica filler and another different moiety interactive with the conjugated diene derived elastomer. Representative examples include organoalkoxymercapto silanes and bis(3-trialkoxysilylalkyl) polysulfides having an average of 2 to 4 connecting sulfur atoms in its polysulfidic bridge. Examples of the silica coupling agent comprise, for example, bis(3-triethoxysilylpropyl) tetrasulfide, bis(3-triethoxysilylpropyl) disulfide, bis(2-triethoxysilylethyl) tetrasulfide, bis(3-trimethoxysilylpropyl) tetrasulfide, bis(2-trimeth-oxysilylethyl) tetrasulfide, 3-mercapto-propyltrimethoxysilane, 3-mercaptopropyl-triethoxysilane, 2-mercaptoethyltrimethoxysilane, 2-mercaptoethyltriethoxysilane, 3-nitropropyltrimethoxysilane, 3-nitropropyltriethoxysilane, 3-chloropropyltrimethoxysilane, 3-chloropropyltriethoxysilane, 2-chloroethyltrimethoxy-silane, 2-chloroethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxy-silylethyl-N,N-dimethylthiocarbamoyl tetrasulfide, 3-trimethoxysilylpropylbenzothiazole tetrasulfide, 3-triethoxysilylpropylbenzothiazole tetrasulfide, 3-triethoxysilylpropyl-methacylate monosulfide, 3-trimethoxysilylpropylmethacylate monosulfide, bis(3-diethoxy-methylsilylpropyl) tetrasulfide, 3-mercaptopropyldimethoxymethylsilane, 3-nitropropyldimethoxymethylsilane, 3-chloropropyldimethoxymethylsilane, dimethoxymethylsilylpropyl-N,N-dimethyl-thiocarbamoyl tetrasulfide, and dimethoxymethylsilylpropylbenzothiazole tetrasulfide.

The siloxy-imine functionalized rubbery polymer has a functional group, namely the N-benzylidene-3-(triethoxysilyl)-1-propaneamine, having a high affinity for silica. Therefore, even when the content of silica coupling agent, which is expensive, in the rubber composition is lower than a conventional content, the use of the functionalized rubbery polymer enables the rubber composition to exhibit physical properties competitive with those of conventional ones. Although the amount of silica reinforcement may vary, depending somewhat on the kind of the silica coupling agent, the amount of silica coupling agent may be, for example, in a range of from 1 to 20 weight percent based on the amount of the silica. In one example, the amount of silica coupling agent may be, for example, in a range of from 5 to 15 weight percent based on the amount of the silica.

Examples of vulcanizing agents include sulfur and sulfur containing compounds. The amount of the vulcanizing agent to be used may be for example 0.1 to 10.0 phr. For example, the amount may be between 1.0 to 5.0 phr.

Examples of the process oil include for example paraffin-based oils, naphthene-based oils, and aromatic-based oils. The amount to be used of the process oil may be, for example, between 0 to 100 phr.

The vulcanization accelerators may include for example thiazole-based ones, such as 2-mercaptobenzothiazole, dibenzothiazyl disulfide, and sulphenamides such as for example N-cyclohexyl-2-benzothiazyl sulphenamide, and guanidine-based ones such as for example diphenylguanidine. The amount to be used of the vulcanization accelerator may be, for example, 0.1 to 5.0 phr. More typical the amount may be, for example, between 0.2 to 3.0 phr.

The rubber composition of the present invention may also typically contain additives that are conventionally used in rubber industries, for example, are antioxidants, zinc oxide, stearic acid, waxes and antidegradients.

The rubber composition may be obtained by milling the ingredients using a kneading apparatus such as a roll mill, an internal mixer, and the like. After being shaped, the rubber composition is vulcanized. The rubber composition can be used in various tire components, such as tire treads, under treads, carcasses, side walls, and beads, and in other industrial applications such as rubber cushions, belts, and hoses, for example. In one example, the rubber composition is suitable as a rubber composition for tire treads.

As described above, the siloxy-imine functionalized rubbery polymer exhibits good reinforcing characteristics in a rubber composition having a filler which includes amorphous silica and/or rubber reinforcing carbon black.

In order to further illustrate the present invention, the following specific examples are given. It should be understood that the examples are not limitations of the scope of the present invention. In the examples, phr means parts per hundred parts rubber by weight and % values are by weight unless otherwise specified.

### Preparation of Polymers

Example 1. Preparation of non-functional control polymer: Polymerizations were carried out in a one gallon batch reactor under moderate stirring and inert nitrogen atmosphere. The reactor is equipped with a variable speed agitator and a heating/cooling jacket to control the reactor temperature via a distributed Foxboro control system. Prior to polymer loading, the reactor was filled with dry hexane and quenched with n-BuLi to minimize the scavenger level. The reaction temperature was set at 60°C. Approximately 1500 grams of 14.5 wt % premix (25/75 wt/wt styrene/butadiene in hexane) was charged into the reactor after it was first passed through a bed of molecular sieves and silica gel under a nitrogen atmosphere. N-Butyl-lithium initiator and N,N,N',N'-tetramethylethylenediamine (TMEDA) modifier were introduced via common syringe techniques. Conversion data was determined gravimetrically or by gas chromatography (GC) analysis of residual monomer. For GC testing, aliquots of the reaction mixture were taken via the dip leg during the course of polymerization and collected into a 60/40 (w/w) solution of ethanol/decane. Polymerizations were terminated after full conversion was reached by treating the live polymer cement with an isopropanol/BHT antioxidant solution. The polymer was recovered by drum drying. The target polymer Mooney was 40 with a glass transition temperature of approximately -25°C.

Example 2. Preparation of functional polymers: Functionalized polymers were prepared as described in Example 1 with the exception that isopropanol/BHT termination was replaced with the appropriate functionalized terminating agent, as discussed further below in Example 3, used at one molar equivalent to the amount of butyl-lithium used to initiate the polymerization. Base Mooney viscosity prior to the functional termination was approximately 40 for all functional polymers and Tg of -25°C.

Example 3. Representative example showing the unexpected performance enhancement of N-benzylidene-3-(triethoxysilyl)-1-propaneamine: Four polymer types were prepared as described in Example 1 (control) and Example 2 (functionalized polymers). Functionalized terminating agents are shown below:

**Siloxy-Imine Termintors**

| | |
|---|---|
| isopropanol (-H) | 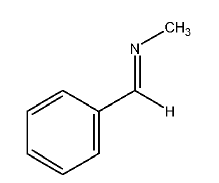 |
| a) Control Non-Functional | b) N-Benzylidenemethylamine |
| 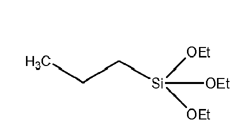 | 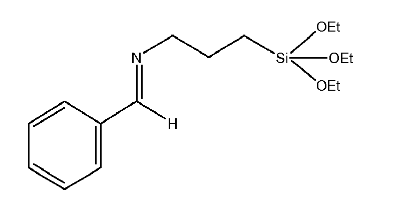 |
| c) N-propyltriethoxysilane | d) N-benzylidene-3-(triethoxysilyl)-1-propaneamine |

The polymers were compounded as follows: The polymers were prepared, and ultimately tested for unexpected performance, into a compound including 65 phr of Silica, 70 phr of the experimental or control polymer, and 30 phr of polybutadiene, and other additives, as follows:

| **Stage** | **Ingredient** | **phr** |
|---|---|---|
| | Solution | |
| | styrene | |
| | butadiene | |
| | rubber, | |
| | functionalized | |
| NP1 | or control | 70 |
| NP1 | Polybutadiene | 30 |
| NP1 | Silica | 65 |
| | Coupling | |
| NP1 | Agent* | 10.4 |
| NP1 | Oil | 20 |
| NP1 | Zinc oxide | 3.5 |
| NP1 | Stearic Acid | 2 |
| NP1 | Antioxidant | 2.2 |
| NP1 | Wax | 1.5 |
| NP2 | re-mill | |
| PR | Sulfur | 1.7 |
| PR | Accelerators | 3.1 |
| PR | Antioxidant | 0.75 |

| | | |
|---|---|---|
| *50 wt% active absorbed on carbon black | | |

Compounds were mixed in a 300 cc Brabender mixer in 3 stages, which consisted of 2 non-productive stages (NP1 and NP2) and 1 productive stages (PR). Rotor speed was adjusted to maintain a constant drop temperature for each compound. Performance indicators for Rolling Resistance (RR) were tan δ at 30-40°C, 5% strain and 10Hz as well as room temperature rebound, Lab indicator for treadwear was Din Abrasion and Lab indicator for processing and filler/polymer interaction was Uncured G' @ 100C, 15% strain and 0.83 Hz. The results are shown in Table 1.

**Table 1: Lab Results for Rolling Resistance, Treadwear, and Filler/Polymer Interaction**

| **Example** | **Polymer Description** | **Polymer Mooney** | **Compound Uncured G'0.83Hz** | **RR- Tan** δ **5% 30C** | **Treadwear -DIN Abrasion** |
|---|---|---|---|---|---|
| 3a | Isopropanol control | 37.3 | 183.9 | 0.244 | 140 |
| 3a | Isopropanol control | 61 | 276.1 | 0.224 | 165 |
| 3b | N-Benzylidenemethylamine | 38 | 183.7 | 0.22 | 140 |
| 3c | N-propyltriethoxysilane | 58.2 | 260.6 | 0.217 | 122 |
| 3d | N-Benzylideneaminopropyltriethoxysilane performance direction | 52.2 | ***375.8*** high better | ***0.176*** lower better | ***117*** lower better |

Examples 3a with low and high Mooney non-functional controls show that increasing Mooney only has a slight effect on lowering tan δ. Examples 3b and 3c show that terminating with only a benzylidene or a siloxypropyl functionalized terminating agent does not lead to significant performance enhancement. Example 3d however shows the unexpectedly powerful reduction in tan δ, decrease in Din Abrasion and increase in polymer-silica interaction is only achieved when using the N-benzylidene-3-(triethoxysilyl)-1-propaneamine terminator, the bi-functional functionalized terminating agent.

Example 4. Table 2 reveals that the dominating feature to improved compound performance is the incorporation of a N-benzylidene-3-(triethoxysilyl)-1-propaneamine (N-Bn TEOS) terminator and not differences in molecular weight.

**Table 2: Molecular Weight Comparison**

| **Example #** | **Terminating Species** | **Polymer Mooney** | **Compound Viscosity (RPA)** | **tan delta 30C** |
|---|---|---|---|---|
| 4a | isopropanol control | 34 | 171 | 0.236 |
| 4b | isopropanol control | 39 | 174.9 | 0.230 |
| 4c | Isopropanol control | 61 | 276.1 | 0.224 |
| 4d | N-Bn TEOS | 48 | **388.1** | **0.179** |
| 4e | N-Bn TEOS | 52.2 | **375.8** | **0.176** |
| 4f | N-Bn TEOS | 89 | **349.1** | **0.174** |

Example 5. Representative example showing the unexpected result that polymers terminated with aldehyde derived imines (aldimines) provide a significant improvement in compound performance over those terminated with ketone derived imines (ketimine). Three polymer types were prepared as described in Examples 1-2. One non-functional control and two functional polymers using two different classes of imine terminators as shown below. The first functional terminator identified as a) is an aldimine and the second identified as b) is an example of a ketimine. Various examples of ketimines, including the ketimine identified in b), are disclosed in US-A- 6,369,197.

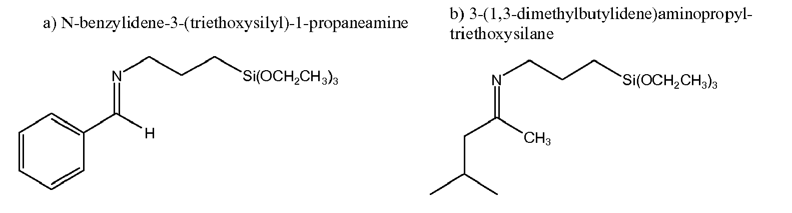

Compound results in Table 3 show that the ketimine-siloxy terminated polymer is indeed an improvement over the control non-functional polymer, however the aldimine-siloxy terminated polymers are unexpectedly far superior to ketimine. The polymers were compounded as described above. Results are shown in Table 3.

**Table 3: Comparison of Ketamine-Siloxy and Aldimine-Siloxy Terminated Polymers**

| **Example** | **Polymer Type** | **Uncured G'** | **TD (40°C, 5%)** | **Rebound RT** | **TD (0°C)** | **Din Abrasion** |
|---|---|---|---|---|---|---|
| 5 | Control | 149 | 0.22 | 40.8 | 0.48 | 140 |
| 5b | Ketamine | 220 | 0.18 | 43.1 | 0.48 | 131 |
| 5a | Aldimine | 306 | 0.14 | 45.4 | 0.49 | 122 |

Example 5. This example serves to further demonstrate the unexpected yet significant reactivity difference between polymers functionalized with aldimines and those functionalized with ketimines.

A representative example of the unexpected and dramatic change in polymer reactivity to hydrolysis and condensation of aldimine-siloxy functional polymers versus ketimine-siloxy functional polymers is as follows.

Three polymer types were prepared as described in Examples 1-2. One non-functionalized control and two functionalized polymers using two different classes of imine terminators; N-benzylidene-3-(triethoxysilyl)-1-propaneamine (aldimine) and N-(1,3-dimethylbutylidene)-3-(triethoxylsilyl)-1-propaneamine (ketimine).

In this example, the prepared polymer was dissolved in hexane at approximate 15 wt% solids was first tested for its zero time molecular weight. Each polymer/hexane solution was then injected into steaming hot water at pH 7.6 and exposed for 20 minutes, 60 minutes, or 120 minutes. The precipitated polymer crumb was then re-tested for molecular weight. Table 4 shows that the aldimine functionalized polymer is unexpectedly and significantly more reactive towards siloxy condensation as measured by a rapid increase in polymer molecular weight with exposure time to hot water.

**Table 4: Results of Steam Hydrolysis**

| **Polymer** | **Control** | **Ketimine** | **Aldimine** |
|---|---|---|---|
| **Time @ 95C** | **Mn (g/mol)** | **Mn (g/mol)** | **Mn (g/mol)** |
| 0 min | 184,000 | 193,000 | 220,000 |
| 20 min | 175,000 | 201,000 | 423,000 |
| 60 min | 177,000 | 234,000 | 676,000 |
| 120 min | 174,000 | 324,000 | 812,000 |

This example can serve as a model for explaining the observed improvement in performance of aldimine derived functionalized polymers in silica compounding. It is known that the siloxy groups enhance silica tread compound performance through condensation with the silica filler surface. Aldimine-siloxy groups are more reactive then ketimine-siloxy groups enhancing this condensation reaction.

## Claims

1. A process for manufacturing a siloxy-imine functionalized rubbery polymer, the process comprising:
polymerizing a conjugated diene monomer to form a polymer by using an
organolithium compound as an initiator in a hydrocarbon solvent; and
reacting an active terminal end of the polymer with a functionalized terminating agent represented by the general formula:
RCH=N(CH₂)_{X}Si(OR¹)_{Y}R²_{3-Y},
wherein R represents a group consisting of an aryl or substituted aryl having of from 6 to 18 carbon atoms, or a heterocycle or heteroaryl having of from 3 to 18 carbon atoms; R¹ and R² each independently represents a group having of from 1 to 18 carbon atoms selected from the group consisting of an alkyl, a cycloalkyl, an allyl, and an aryl; X is an integer from 1 to 20; and Y is an integer from 1 to 3.

2. The process according to claim 1, wherein polymerizing a conjugated diene monomer to form a polymer comprises copolymerizing a conjugated diene monomer and a monovinyl aromatic monomer to form a copolymer, the conjugated diene monomer and the monovinyl aromatic hydrocarbon monomer preferably being 1,3-butadiene and styrene, respectively.

3. The process according to claim 1, wherein polymerizing a conjugated diene monomer to form a polymer comprises copolymerizing a conjugated diene monomer, a vinyl aromatic hydrocarbon monomer, and a functionalized vinyl aromatic monomer to form a terpolymer.

4. The process according to at least one of the previous claims wherein R of is selected from the group consisting of phenyl, substituted-phenyl, naphthyl, substituted-naphthyl, and heteroaryl.

5. The process according to at least one of the previous claims wherein the functionalized terminating agent is N-benzylidene-3-(triethoxysilyl)-1-propaneamine or N-naphthylidene-3-(triethoxysilyl)-1-propaneamine and/or wherein R¹ is an ethyl radical.

6. A siloxy-imine functionalized rubbery polymer obtained by the process recited in one of the previous claims.

7. A siloxy-imine functionalized rubbery polymer comprising N-benzylidene-3-(triethoxysilyl)-1-propaneamine.

8. A siloxy-imine functionalized rubbery polymer containing a functionalized terminating agent of the general formula:
RCH=N(CH₂)_{X}Si(OR¹)_{Y}R²_{3-Y},
wherein R represents a group consisting of an aryl or substituted aryl having 6 to 18 carbon atoms, or a heterocycle or heteroaryl having 3 to 18 carbon atoms; R¹ and R² each independently represents a group having 1 to 18 carbon atoms selected from the group consisting of an alkyl, a cycloalkyl, an allyl, and an aryl; X is an integer from 1 to 20; and Y is an integer from 1 to 3.

9. A rubber composition comprising 100 parts by weight of a rubbery polymer and 10 to 130 parts by weight of a rubber reinforcing filler, wherein at least 25% to 100% by weight of the rubbery polymer is a siloxy-imine functionalized rubbery polymer prepared by a process according to at least one of the claims 1 to 5.

10. The rubber composition according to claim 9, wherein the rubber reinforcing filler is selected from the group consisting of amorphous silica, precipitated silica, rubber reinforcing carbon black, a combination of silica and carbon black, and clay.

11. A rubber composition comprising 100 parts by weight of a rubbery polymer and 10 to 130 parts by weight of a rubber reinforcing filler, wherein at least 25% to 100% by weight of the rubbery polymer is a siloxy-imine functionalized rubbery polymer comprising a functionalized terminating agent represented by the general formula:
RCH=N(CH₂)_{X}Si(OR¹)_{Y}R²_{3-Y},
wherein R represents a group consisting of an aryl or substituted aryl having 6 to 18 carbon atoms, or a heterocycle or heteroaryl having 3 to 18 carbon atoms; R¹and R² each independently is a group having 1 to 18 carbon atoms selected from the group consisting of an alkyl, a cycloalkyl, an allyl, and an aryl; X is an integer from 1 to 20; and Y is an integer from 1 to 3.

12. A tire having a component comprising the rubber composition of claim 9, 10 or 11.
